Europäisches Patentamt

European Patent Office

Office européen des brevets

(11) Veröffentlichungsnummer: **0 359 935**
**A2**

## (12) EUROPÄISCHE PATENTANMELDUNG

(21) Anmeldenummer: 89113294.6

(51) Int. Cl.⁵: **B27K 3/50**

(22) Anmeldetag: 20.07.89

(30) Priorität: 19.09.88 DE 3831759

(43) Veröffentlichungstag der Anmeldung:
28.03.90 Patentblatt 90/13

(84) Benannte Vertragsstaaten:
AT BE CH DE ES FR GB GR IT LI LU NL SE

(71) Anmelder: Verkaufsgesellschaft für
Teererzeugnisse (VfT) mbH
Varziner Strasse 49
D-4100 Duisburg 12(DE)

(72) Erfinder: Alscher, Arnold, Dr. rer. nat.
Zeissbogen 10
D-4200 Essen 1(DE)
Erfinder: Stadie, Dieter
Prosperstrasse 147
D-4250 Bottrop(DE)

(54) **Imprägnieröl.**

(57) Die Erfindung betrifft ein neues Imprägnieröl auf der Basis steinkohlenteerstämmiger Öle mit extrem niedrigem Gehalt an polycyklischen aromatischen Verbindungen. Dies wird erreicht durch Kombination niedrig- und mittelsiedender Anteile eines Steinkohlenteeröls mit einem aromatischen Harz.

EP 0 359 935 A2

## Imprägnieröl

Die Erfindung betrifft neue Holzschutzmittel auf Basis steinkohlenteerstämmiger Öle.

Die Verwendung steinkohlenteerstämmiger Öle für den Holzschutz ist seit langem bekannt. Entsprechende Imprägnieröle sind Gemische von bei der Destillation des Steinkohlenteers anfallenden Fraktionen im Siedebereich von 180-450 °C. Dabei unterscheidet man in sogenannte niedrig siedende Anteile mit einem Siedebereich von 180-270 °C (15-40 %), sogenannte mittelsiedende Anteile mit einem Siedebereich von oberhalb 270-355 °C (20-70 %) und hochsiedende Anteile mit einem Siedepunkt oberhalb 355 °C (15-40 %). Es ist ein Nachteil dieser hochwirksamen Öle, daß sie einen hohen Anteil polyzyklischer aromatischer Verbindungen, d. h. solche mit mehr als 4 aromatischen Kernen, enthalten. Unter diesen Verbindungen befinden sich einige, die derzeit als cancerogen oder zumindest cocancerogen eingestuft werden. Die wohl bekannteste dieser Verbindungen ist Benzo(a)pyren, das in einer Menge bis zu 1.000 ppm und zum Teil darüber in derartigen Imprägnierölen enthalten ist.

Gemäß neuester Bestrebungen zum Schutze der Verbraucher wird angestrebt, den Benzo(a)pyrengehalt in Holzschutzölen auf weniger als 50 ppm zu begrenzen.

Es ist daher Aufgabe der Erfindung, ein Holzschutzmittel auf Basis imprägnierender Öle bereitzustellen, das in seiner Schutzwirkung den derzeit eingesetzten steinkohlestämmigen Imprägnierölen entspricht, dessen Gehalt an polyzyklischen Aromaten aber wesentlich reduziert ist. Insbesondere soll der Gehalt an Benzo(a)pyren unter 50 ppm liegen.

Die Lösung der Aufgabe erfolgt durch Holzschutzmittel gemäß der Ansprüche 1-8.

Dem Fachmann ist bekannt, daß die polyzyklischen aromatischen Verbindungen bevorzugt in den hochsiedenden Anteilen der Imprägnieröle anzutreffen sind. Dies gilt auch für Benzo(a)pyren, dessen Siedepunkt bei 495,5 °C liegt.

Die Abtrennung dieser polyzyklischen aromatischen Verbindungen aus den hochsiedenden Anteilen, z. B. durch Rektifikation ist technisch sehr aufwendig bzw. in bestehenden Destillationsanlagen fast unmöglich.

Es wäre von daher naheliegend gewesen, ein Imprägnieröl auf Steinkohlenteerbasis herzustellen, das lediglich tief- und mittelsiedende, aber keine hochsiedenden Fraktionen enthält. Leider zeigte sich, daß damit keine ausreichende Holzschutzwirkung gegeben ist. Insbesondere die Langzeitschutzwirkung ist mit derartigen Ölen stark reduziert; d. h., die hochsiedenden Anteile der steinkohlestämmigen Imprägnieröle werden von der Fachwelt als für die gute Holzschutzwirkung insbesondere für den guten Langzeitschutz, wie er für Gebrauchshölzer wie z. B. Schwellen, Postmasten oder Wasserbauhölzer gefordert wird, als wesentlich angesehen.

Es wurde nun gefunden, daß man auch mit niedrig- und mittelsiedenden steinkohlestämmigen Ölen eine gute, lang anhaltende Holzschutzwirkung erhält, wenn diese Öle 10 bis 30 Gew.-% eines aromatischen Harzes enthalten. Dies ist insofern besonders überraschend, als die einzusetzenden Harze an sich keine holzschützende Wirkung haben.

Die erfindungsgemäßen Imprägnieröle aus 70-90 Gew.-% niedrig- und/oder mittelsiedenden Steinkohlenteerölen und 10-30 Gew.-% aromatischem Harz aber zeigen eine den bislang üblichen Imprägnierölen vergleichende Holzschutzwirkung. Darüberhinaus haben sie den Vorteil, daß sie extrem arm sind an polyzyklischen aromatischen Verbindungen mit mehr als vier aromatischen Kernen. Insbesondere ihr Gehalt an Benzo(a)pyren liegt wesentlich unter 50 ppm, zum Teil sogar im Bereich unterhalb 5 ppm.

Die Mengenverteilung der Steinkohlenteerölfraktionen zueinander kann beliebig sein. Im allgemeinen aber liegt sie im bekannten Bereich: 15-40 Gew.-% niedrigsiedende Anteile (180-270 °C) und 30-70 Gew.-%, jeweils bezogen auf die Gesamtmischung, mittelsiedende Anteile (mehr als 270-355 °C), wobei aber die Summe aus niedrig- und mittelsiedenden Anteilen 70-90 Gew.-% beträgt.

Einsetzbare aromatische Harze sind alle Polymerisate mit einem aromatischen oder quasiaromatischen Grundkörper wie Inden-, Cumaron-Inden-, aromatische Kohlenwasserstoff- und Styrolharze oder Harzrückstände aus Crack- oder Synthesereaktionen wie z. B. Rückstände aus Visbreakern oder Ethylencrackern, aus der Synthese von Styrol, Phenol, Ethylbenzol oder Dimethylterephthalat.

Bevorzugte aromatische Kohlenwasserstoffharze sind Polymerisate aus polymerisierbaren aromatischen Kohlenwasserstoffgemischen, die sich in den im Temperaturbereich von 140 bis etwa 220 °C siedenden Destillaten aus dem Steinkohlenhochtemperaturteer oder bei der Crackung von Naphtha oder Gasöl sowie bei der Pyrolyse von Crackrückständen finden und die in einer im Bereich von 160-220 °C siedenden Fraktion, der sogenannten Harzölfraktion anreichern. Diese Fraktionen enthalten als ungesättigte aromatische Verbindungen im wesentlichen Inden, Vinyltoluol Methylinden, Gumaron, Dicyclopentadien, Methyldicyclopentadien, Styrol und α-Methylstyrol in einer Konzentration von 50-70 % neben nicht reaktiven aromatischen Verbindungen die nach der Polymerisation destillativ entfernt werden.

Die Harze werden in den Steinkohlenteerölen gelöst, bevorzugt bei Temperaturen im Bereich von 80-120 °C und bilden nach dem Abkühlen lagerstabile Lösungen. Diesen Lösungen können weitere biozid wirksame (fungizide und/oder insektizide) Substanzen zugesetzt werden. Die so hergestellten erfindungsgemäßen Imprägnieröle können in allen bekannten Verfahren als Holzschutzöle eingesetzt werden. Insbesondere sind sie geeignet für Tauch-, Trogtränk-(Heiß/kalt-) und Kesseldruckverfahren.

Die erfindungsgemäßen Imprägnieröle zeigen folgende Vorteile:

Sie sind hochwirksam gegen holzzerstörende Mikroorganismen und Insekten mit einer guten Langzeitwirkung. Letztere ist auch bedingt durch eine sehr geringe Verdunstungs und Auswaschungsrate. Mit den Imprägnierölen behandelte Hölzer sind stark wasserabweisend. Die Öle bluten nicht aus. Die Holzoberflächen bleiben gleichmäßig glatt und dennoch kommt überraschenderweise die Maserung des Holzes verstärkt zum Ausdruck.

## Beispiele

### Vorbemerkung

Die pilzwidrige Wirksamkeit von Holzschutzmitteln wird üblicherweise nach dem Klötzchenverfahren bestimmt. Als Prüfverfahren werden die Vorschriften DIN 51 176 angewandt. Von den verschiedenen Prüfpilzen ist für aromatische Imprägnieröle Lentinus lepideus als resistentester Pilz am besten geeignet.

Die Holzschützende Wirkung wird durch den Bereich zwischen 2 Grenzwerten angegeben. Der kleine Wert gibt die Schutzmittelmenge an, die das Holz nicht mehr ausreichend schützt. Der hohe Wert stellt die kleinste Schutzmittelmenge dar, die das Holz gerade noch schützt.

Da es sich hierbei um biologische Prüfungen mit relativ großer Schwankungsbreite handelt, ist eine gewisse Streuung der Ergebnisse bei der vergleichenden Wertung zu berücksichtigen.

Weitere wichtige Eigenschaften von Imprägnierölen sind die Eindringfähigkeit in Holz und die Dauerhaftigkeit der Imprägnier-Wirkung. Zu ihrer Bestimmung werden DIN 51 168 (Eindringtiefe) und die bioligische Wirksamkeitprüfung in Verbindung mit der Auswaschbarkeit nach DIN 52 176/EN 84 und die Verdunstungsprüfung im Windkanal nach DIN 52 176 herangezogen.

### Beispiele 1 bis 5

Es wurden Mischungen aus Steinkohlenteer-Fraktionen mit den Siedebereichen 180 bis 270 °C (A) und 270 bis 355 °C (B) mit den folgenden Harzen bzw. Polymerisaten hergestellt:

C = Inden-Cumaron Harz (IC 84)
Erweichungspunkt (K.S.) 85 °C
Helligkeit (Barrett) 4
D = aromatisches Kohlenwasserstoffharz (KW-DP)
Erweichungspunkt (K.S.) 85 °C
Helligkeit (Barrett) 3
E = Pyrolyserückstand (WR-Harz)
Erweichungspunkt (K.S.) 95 °C
Farbe: dunkelbraun
F = Syntheserückstand aus der Phenolsynthese
Erweichungspunkt (K.S.) 70 °C
Farbe: dunkelbraun

Die entsprechenden Formulierungen (1-5) sind in der Tabelle 1 aufgeführt, sie werden durch Mischen in einem Rührbehälter unter Erwärmung bis 120 °C hergestellt und nach dem Abkühlen für weitere Untersuchungen und Anwendungen eingesetzt.

Tabelle 1:

EP 0 359 935 A2

| Imprägnieröl-Formulierung | | | 1 | 2 | 3 | 4 | 5 |
|---|---|---|---|---|---|---|---|
| **Ausgangsstoffe** | | | | | | | |
| Steinkohlenteeröl-Destillat | A | [%] | 24 } 70 | 35 } 90 | 24 } 75 | 37 } 80 | 33 } 75 |
| | B | | 46 | 55 | 51 | 43 | 42 |
| Inden-Cumaron Harz | C | | 30 | 10 | | | |
| Kohlenwasserstoffharz | D | | | | 25 | | |
| Pyrolyserückstand | E | | | | | 20 | |
| Syntheserückstand | F | | | | | | 25 |
| **Beschaffenheit** | | | | | | | |
| Dichte | | [g/cm³] | 1,12 | 1,15 | 1,08 | 1,12 | 1,11 |
| Wassergehalt | | [%] | 0,1 | 0,1 | 0,1 | 0,1 | 0,3 |
| Saure Bestandteile | | [%] | 1,8 | 2,0 | 1,9 | 2,2 | 2,9 |
| Unlösliche Bestandteile | | [%] | / | / | Spuren | Spuren | Spuren |
| Siedeverlauf bis 235 °C | | [Vol %] | / | / | 5 | 6 | 4 |
| bis 300 °C | | [Vol %] | 32 | 41 | 37 | 41 | 38 |
| bis 355 °C | | [Vol %] | 71 | 90 | 75 | 80 | 73 |
| Kristallisationsbeginn | | [°C] | < 0 | < 0 | < -5 | < 0 | < -5 |
| Gehalt an Benzo(a)pyren | | [ppm] | 5 | 5 | 8 | 50 | 15 |
| Giftgrenzwerte gegen Lentinus lepideus DIN 52 176 | | [kg/m³] | 28-42 | 24-38 | 25-39 | 27-38 | 22-34 |
| nach Beanspruchung (DIN 52 176/EN 84/EN 73) | | [kg/m³] | 47-83 | 75-108 | 48-72 | 86-105 | 68-94 |
| Eindringtiefe (Kiefernholz) (DIN 52 168) | | [ppm] | 5,5 | 6,5 | 5 | 6 | 5 |
| Holzfarbe | | | dunkelbr. | hellbr. | mittelbr. | dunkelbr. | dunkelbraun |
| Holz-Maserung | | | anfeuernd | anfeuernd | glatt | glatt | glatte Oberfl. |
| Oberfläche | | | glänzend | glänzend | glänzend | glänzend | glänzend |

hydrophobierend - kein Ausbluten bei imprägniertem Holz

Die Holzschutzformulierungen 1-5 wurden für die Verwendung im Kesseldruck-Vakuum Verfahren und im Heiß-Kaltverfahren abgeprüft. Um die erforderliche Fluidität und die erforderliche vollständige Imprägnierung des Splintholzes zu erreichen, ist eine für diese Holzschutzverfahren übliche Imprägnieröltemperatur über 50 °C, vorzugsweise über 100 °C erforderlich.

Formulierungen 2-4 lassen sich aufgrund der geringen Viskosität von 12 bis 20 mPa˙s (20 °C) für das Anstreichverfahren einsetzen. Als besonderer Vorteil erweist sich die erhöhte Hydrophobierung der Oberfläche des behandelten Holzes und die je nach Imprägnierverfahren erzielbare optischen Verbesserungen, u. a. der "Anfeuerung" der Holz-Maserung.

Im Vergleich zu den üblichen Imprägnierölen zeigen die Formulierungen 1-5 ein geringeres Ausblutverhalten aus den damit behandelten Hölzern.


Vergleichsbeispiel 1

Zu Vergleichszwecken wird ein handelsübliches für die Konservierung von Gebrauchshölzern (u.a. Holzschwellen) verwendetes Imprägnieröl (WEI Typ A) eingesetzt. Die Beschaffenheitsdaten entsprechen den Westeuropäischen Lieferbedingungen für Imprägnieröle (WEI-Spezifikation).

| | |
|---|---|
| Dichte D 20 [g/cm³] | 1,12 |
| Wassergehalt [Vol %] | 0,2 |
| Kristallisationsbeginn [°C] | 20 |
| Gehalt an sauren Bestandteilen [Vol %] | 2,4 |
| Unlösliche Bestandteile | Spuren |
| Siedeverlauf [Vol %] | |
| Destillat bis 235 °C | 6 |
| bis 300 °C | 30 |
| bis 355 °C | 73 |
| Benzo(a)pyren Gehalt [ppm] | 870 |
| Grenzwerte gegenüber Lentinus lepideus DIN 52 176 [kg/m³] | 40-58 |
| nach Auswaschung und 12 Wochen Windkanal (DIN 52 176/EN 84/EN 73) [kg/m³] | 66-98 |
| Eindringtiefe mit Kiefernholz (DIN 52 168) [mm] | 5,0 |


Vergleichsbeispiel 2

Es wurde ein analoges Öl wie im Beispiel 1 hergestellt, jedoch ohne die hochsiedende Fraktion mit dem Siedebereich über 355 °C und zu vergleichenden Untersuchungen unterzogen.

| | |
|---|---|
| Dichte [g/cm³] | 1,08 |
| Wassergehalt [%] | 0,2 |
| saure Bestandteile [Vol %] | 2,8 |
| Unlösliche Bestandteile [Vol %] | / |
| Siedeverlauf [Vol %] | |
| Destillat bis 235 °C | 9 |
| bis 300 °C | 48 |
| bis 355 | 100 |
| Benzo(a)pyren Gehalt [ppm] | 5 |
| Grenzwerte gegenüber Lentinus lepideus DIN 52 176 [kg/m³] | 20,5-31 |
| nach Auswaschung und Windkanal (DIN 52 176/EN 84/EN 73) kg/m³ | über 250 |
| Eindringtiefe mit Kiefernholz (DIN 52 168) (Kiefernsplintholz) [mm] | 6 |

EP 0 359 935 A2

Es ist festzustellen, daß trotz guter ursprünglicher Wirksamkeit, die Langzeitschutzwirkung nicht gegeben ist und damit diese Formulierung wegen mangelnder Dauerhaftigkeit nicht geeignet ist.

Darüber hinaus wurde bei Einsatz der o. g. Formulierung bei Kesseldruck-Imprägnierung an Palisaden (aus Kiefernholz Ø - 20 cm, l - 1,50 cm) ein starkes Ausschwitzverhalten insbesondere aus der der Sonne ausgesetzten Seite beobachtet.

**Ansprüche**

1. Holzschützendes Imprägnieröl auf der Basis steinkohlenteerstämmiger Öle, **dadurch gekennzeichnet,** daß es niedrig- und/oder mittelsiedende Anteile eines Steinkohlenteeröls und ein aromatisches Harz enthält.

2. Imprägnieröl nach Anspruch 1, **dadurch gekennzeichnet,** daß niedrig- und/oder mittelsiedende Anteile eines Steinkohlenteeröls und aromatisches Harz im Verhältnis 70:30-90:10 vorliegen.

3. Imprägnieröl nach den Ansprüchen 1 und 2, **dadurch gekennzeichnet,** daß die niedrig- und mittelsiedenden Anteile eines Steinkohlenteeröls im Bereich von 180-355 °C sieden.

4. Imprägnieröl nach den Ansprüchen 1 bis 3, **dadurch gekennzeichnet,** daß das aromatische Harz ein Kohlenwasserstoff-Harz ist.

5. Imprägnieröl nach den Ansprüchen 1 bis 3, **dadurch gekennzeichnet,** daß das aromatische Harz ein Cumaron-Inden-Harz ist.

6. Imprägnieröl nach den Ansprüchen 1 bis 3, **dadurch gekennzeichnet,** daß das aromatische Harz ein Syntheserückstand ist.

7. Imprägnieröl nach den Ansprüchen 1 bis 3, **dadurch gekennzeichnet,** daß das aromatische Harz ein Gemisch aus Vertretern der Gruppe Kohlenwasserstoff-Harz, Cumaron-Inden-Harz oder Syntheserückstand ist.

8. Imprägnieröl nach den Ansprüchen 1 bis 7, **dadurch gekennzeichnet,** daß es zusätzlich ein oder mehrere biozid wirksame Substanzen enthält.

6